# EUROPÄISCHE PATENTSCHRIFT

(11) **EP 0 493 557 B1**
(45) Veröffentlichungstag und Bekanntmachung des Hinweises auf die Patenterteilung: **11.01.1995**
(21) Anmeldenummer: 91912847.0
(22) Anmeldetag: 17.07.1991
(51) Int. Cl.: H05B 7/02, F27D 11/08, F27B 3/12

(54) **GLEICHSTROM-LICHTBOGENOFEN**
D.C ARC FURNACE
FOUR A ARC A COURANT CONTINU

(30) Priorität: 17.07.1990 DE 4022720
(43) Veröffentlichungstag der Anmeldung: 08.07.1992
(73) Patentinhaber: Flohe GmbH & Co, D-44560 Castrop-Rauxel (DE)
(72) Erfinder: ELSNER, Emil, D-7573 Sinzheim-Vormberg (DE); DUNG, Herbert, D-4600 Dortmund 30 (DE)
(74) Vertreter: Henfling, Fritz, Dipl.-Ing.
(86) Internationale Anmeldenummer: DE9100582
(87) Internationale Veröffentlichungsnummer: WO9202112

(56) Entgegenhaltungen:
- DE-A- 2 905 553
- DE-A- 3 413 745
- DE-A- 3 534 750
- US-A- 4 592 066

## Beschreibung

Die Erfindung betrifft einen Gleichstrom-Lichtbogenofen der im Oberbegriff des Patentanspruchs 1 umrissenen Gattung.

Bei Gleichstrom-Lichtbogenöfen ist es möglich, im Gegensatz zu Drehstrom-Lichtbogenöfen mit nur einer durch den Deckel des Ofens anstellbaren Graphitelektrode als Kathode und einer Bodenelektrode als Anode zu arbeiten. Anlagenseitig resultiert daraus ein geringerer konstruktiver Aufwand. Solche Gleichstrom-Lichtbogenöfen zeichnen sich dann auch durch einen wesentlich geringeren Elektrodenverbrauch sowie durch eine längere Standzeit der feuerfesten Auskleidung der Gefäßwandung aus. Was die Energieseite betrifft, ist der Verbrauch geringer, des weiteren kommt es zu merklich geringeren Netzrückwirkungen (Flicker-Erscheinungen). Der geringeren induktiven Einflüsse wegen kann bei der Ofenkonstruktion dann auch weitgehend auf die Verwendung austenitischer Stahlqualitäten verzichtet werden. Ein weiterer Vorteil des Gleichstrom-Lichtbogenofens sind seine geringere Geräuschemissionen.

Gewisse Probleme wirft beim Gleichstrom-Lichtbogenofen die die Gegenelektrode zur kathodisch geschalteten, durch den Deckel des Gefäßes gegen den Herd anstellbaren Graphitelektrode bildende anodisch geschaltete Bodenelektrode auf. Hierfür hat man zunächst einen sich durch den Boden und die auf dem Boden aufsitzende feuerfeste Auskleidung durchdringenden Eisenkern vorgesehen, der allerdings zumal bei Schmelzen mit niedrigem Kohlenstoff- und hohem Sauerstoffgehalten einem schnellen Wegschmelzen unterworfen ist. Weitergehend hat man anstelle eines Eisenkerns mit vergleichsweise großem Querschnitt eine Mehrzahl von Stahlstäben vorgesehen, die sich von einer am Gefäßboden angesetzten, anodisch geschalteten Stahlplatte ausgehend bis zur Herdsohle erstrecken (DE-OS 34 09 255). Die Zustellung, das heißt das Ein- bzw. Aufbringen der feuerfesten Auskleidung bereitet hierbei erkennbar Schwierigkeiten. Schwierigkeiten bereitet auch das nachträgliche Eintreiben der Stahlstäbe in die feuerfeste Auskleidung bis zum Kontakt mit der anodisch geschalteten Bodenplatte. Soweit vorgeschlagen worden ist, den die Anode bildenden Bereich des Gefäßbodens auswechselbar auszubilden (DE-OS 35 35 692) ergeben sich entsprechende Probleme bei der Erstellung der Austauschelemente. In beiden Fällen bleibt die Ausbildung des Anodenbereichs im übrigen auf das Zentrum des Herdbodens beschränkt.

Anstelle der die Anode ausbildendenden Stahlstäbe ist dann auch schon vorgeschlagen worden, die feuerfeste Bodenauskleidung selbst elektrisch leitend durch den Einsatz von blech- oder graphitummantelten Steinen oder aber Steinen mit einen höheren Graphitanteil auszubilden, wobei als Zwischenlage zwischen dem Gefäßboden aus Stahl und der feuerfesten Auskleidung auch schon eine Kupfereinlage ingestalt von Schienen oder Blechen vorgesehen wurde, an der der Anodenstrom liegt (DE-OS 35 34 750 und DE-OS 34 13 745). Eine Variante sieht eine mehrlagige feuerfeste Auskleidung des Gefäßbodens, bestehend aus mehreren Lagen von feuerfesten, elektrisch leitend ausgebildeten Steinen und einer darauf aufgebrachten feuerfesten Stampfmasse vor, wobei durch die Stampfmasse in Kontakt mit der obersten Steinlage gelangende Stahlstäbe getrieben sind (DE-OS 29 05 553). Auch hierbei ist bereits angesprochen, daß die feuerfeste Bodenauskleidung von einer anodisch geschalteten Kupferplatte unterfangen sein kann. Eine Kupferplatte selbst ist allerdings nicht geeignet, tragende Funktionen zu ubernehmen. Nach dem Stand der Technik ist deshalb ein Stahlblechboden vorgesehen, der mit einer Überdeckung aus stoßenden Kupferblechsegmenten versehen ist, die mit dem Stahlblechboden durch eine Vielzahl von Bolzen zusammengefaßt sind.

Die Ausbildung des Gefäßbodens selbst als Anode erweist sich insoweit als vorteilhaft, als der Stromübergang bei größtmöglicher Kontaktfläche erfolgt, woraus eine niedrige spezifische Strombelastung des Gefäßbodens, speziell seiner feuerfesten Auskleidung, resultiert, was sich in einer Verbesserung der Standzeit des Bodens niederschlägt. Als nachteiligt erweist sich bei diesem Stand der Technik die Art und Weise der Zusammenfassung des tragenden Stahlblechbodens mit dem Kupferbelag, wofür bei übereinstimmendem Lochbild eine Vielzahl von Bohrungen in den Stahlblechboden und in die ihm zuzuordnenden Kupferblechsegmente einzubringen ist, durch die sich die die Elemente zusammenfassenden Bolzen erstrecken. Diese Art und Weise der Zusammenfassung von Stahlblechboden und Kupferblechsegmenten ist ersichtlich sehr aufwendig. Dabei verbleiben zwischen dem Stahlblechboden und der Kupferbelag dann zwangsläufig auch Luftspalte sowohl zwischen den Kupferblechsegmenten selbst als auch zwischen dem tragenden Stahlblechboden und den Kupfersegmenten, die im laufenden Betrieb unter der Einwirkung der hohen Betriebstemperatur dann auch noch eine Vergrösserung erfahren. Daraus resultiert das Risiko des Unterlaufens des Kupferbelages durch vom Einsatz herrührendes Schwermetall. Hierdurch wird die erforderliche Kühlung des Bodens beeinträchtigt, im Endeffekt dann auch die Bodenhaltbarkeit.

Ausgehend vom Stand der Technik liegt der Erfindung die Aufgabe zugrunde, eine Lösung für den mit einem Kupferbelag versehenen Gefäßboden eines Gleichstrom-Lichtbogenofens anzugeben, die die insoweit aufgezeigten Nachteile vermeidet.

Die Aufgabe wird bei gattungsgemäßen Gleichstrom-Lichtbogenöfen durch eine Ausbildung des Gefäßbodens entsprechend dem kennzeichnenden Teil des Patentanspruchs 1 gelöst.

Bei dem erfindungsgemäß aus kupferplattiertem Stahlblech bestehenden Gefäßboden handelt es sich um ein einfaches, kompaktes Bauteil, das dementsprechend kostengünstig ist. Das Bauteil verbindet mit der gewünschten größtmöglichen Kontaktfläche für den Stromübergang die Vermeidung der Mängeln, mit denen nach dem Stand der Technik mit einem Kupferbelag in Gestalt von Schienen, Blechen bzw. Blechzuschnitten (Segmenten) versehene Stahlblechböden behaftet sind.

Ausgestaltungen der Erfindung ergeben sich aus den Unteransprüchen. Die große Kontaktfläche für den Stromübergang gestattet es, ausgehend vom Boden einen abnehmenden Anteil von die elektrische Leitfähigkeit der feuerfesten Auskleidung hervorrufenden Bestandteilen, insbesondere Graphit, in der Auskleidung vorzusehen. Damit erhöht sich die Standzeit der feuerfesten Auskleidung. Mit entsprechender Zielsetzung kann vorgesehen sein, im Zentrum der Bodenauskleidung eine im wesentlichen von die elektrische Leitfähigkeit hervorrufenden Bestandteilen freie feuerfeste Auskleidung vorzusehen. Eine zwischen dem kupferplattiertem Stahlblechboden und der auf ihm aufsitzenden feuerfesten Auskleidung eingefügten Zwischenlage aus Graphit verbessert den Stromübergang vom Boden in die von ihm unterfangene Auskleidung. Anstelle einer Kupferplattierung für den tragenden Bestandteil des Gefäßbodens kann natürlich auch eine Plattierung aus einer Kupferlegierung mit hohem Kupferanteil vorgesehen sein.

In der Zeichnung ist die Erfindung anhand eines in schematischer Weise dargestellten Gleichstrom-Lichtbogenofens weitergehend erläutert. Es zeigen:
- Figur 1: den Lichtbogenofen im Schnitt,
- Figur 2: einen Ausschnitt aus dem Gefäßboden in größerem Maßstab.

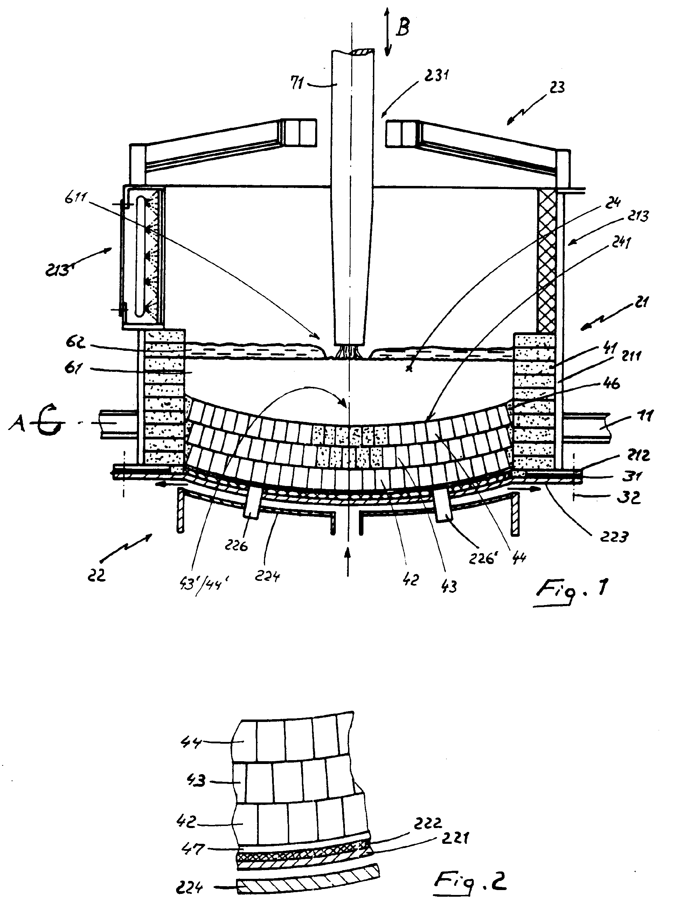

Der Ofen besteht aus dem in einer in die Ofenplattform kippbar (Doppelpfeil A) integrierten Tragkonstruktion 11 gelagerten Gefäß 21 mit dem Boden 22 und dem von ihm abhebbaren Deckel 23. Der aus kupferplattiertem Stahlblech 221, 222 bestehende Boden 22 ist an den Gefäßmantel 211 unter Einfügung einer Isolierung 31 lösbar angeflanscht (212, 32, 223).

Das Gefäß 21, insbesondere der Herd 24 mit der Herdsohle 241, ist zugestellt, also mit einer feuerfesten Auskleidung versehen. Konkret ist die Wandung im Bereich des Herdes 24 mit Magnesitsteinen 41 ausgekleidet und der Boden mit mehreren Lagen 42, 43 und 44 aus Graphit enthaltenden Magnesitsteinen, von denen die unterste Lage 42 mit ca. 20% den höchsten Graphitanteil aufweist, die folgende Lage 43 einen Anteil von ca. 10% und die dritte Lage 44 einen unter 10% liegenden Graphitanteil unter Aussparung eines zentrischen Bereichs 43′, 44′, in dem zumindest in den oberen Steinlagen graphitfreie Magnesitsteine eingesetzt sind. Verbleibende Zwischenräume zwischen der Wandausmauerung 41 und der Bodenausmauerung 42, 43, 44 sind mit feuerfester Stampfmasse 46 ausgefüllt. Zwischen dem Gefäßboden 22 und die unterste Lage 42 der Bodenauskleidung ist noch eine Graphitschicht 47 eingefügt. Auf die oberste Steinlage 44 kann dann auch noch feuerfeste, graphithaltige Stampfmasse aufgebracht sein, zumindest die oberste Lage 44 selbst kann auch aus feuerfester Stampfmasse bestehen. Die Gefäßwandung oberhalb des Herdes 24 wird gebildet von Kühlelementen, beispielsweise von kühlwasserdurchströmten Elementen 213 oder von Spritzkühlelementen 213′. Für die Bodenkühlung ist unterhalb des Bodens 22 ein Luftleitblech 224 vorgesehen.

Im Herd 24 befindet sich die Schmelze 61 mit der auf ihr befindlichen Schlacke 62. Im Zentrum ist der Brennfleck 611 ausgebildet.

Die die Kathode bildende Graphitelektrode 71 führt sich senk- und hebbar (Doppelpfeil B) in dem zentrischen Durchgang 231 im Gefäßdeckel 23. Der Anodenstrom liegt über die sich durch den Stahlblechboden 221 erstreckenden Anschlüsse 226, 226′ an der Kupferplattierung 222 des Gefäßbodens 22.

Beim dargestellten Ofen sind im Zentrum der Bodenauskleidung 42, 43, 44 in den oberen Lagen 43, 44 die elektrisch leitend ausgebildeten Magnesitsteine ausgespart und elektrisch nichtleitende Magnesitsteine 43′, 44′ eingesetzt.

## Patentansprüche

1. Gleichstrom-Lichtbogenofen mit einer durch den Deckel (23) des Gefäßes (21) gegen den Herd (24) anstellbaren kathodisch geschalteten Graphitelektrode (71), dessen die Anode bildender Gefäßboden aus einem tragenden Stahlblechboden (22) und einer darauf aufsitzenden Ausmauerung (42, 43, 44) aus feuerfestem, zumindest teilweise elektrisch leitendem Material besteht, wobei zwischen dem Stahlblechboden (22) und der feuerfesten Ausmauerung (42, 43, 44) eine Einlage aus Kupfer eingefügt ist, die anodisch geschaltet ist, gekennzeichnet durch einen kupferplattierten Stahlblechboden (221, 222) mit den Stahlblechboden (221) durchsetzenden, an der Kupferplattierung (222) liegenden Anschlüssen (226, 226′) für den Anodenstrom.

2. Gleichstrom-Lichtbogenofen nach Anspruch 1, dadurch gekennzeichnet, daß die feuerfeste, auf dem Boden (22) aufsitzende Auskleidung (42, 43, 44) aus Graphit enthaltendem Material besteht.

3. Gleichstrom-Lichtbogenofen nach Anspruch 1 oder Anspruch 2, dadurch gekennzeichnet, daß der Graphitgehalt der auf dem Gefäßboden aufsitzenden feuerfesten Auskleidung ausgehend vom Boden (22) zur Herdsohle (241) hin abnimmt.

4. Gleichstrom-Lichtbogenofen nach Anspruch 3, dadurch gekennhzeichnet, daß der Graphitanteil im Bereich des Bodens ca. 20% beträgt und der Graphitanteil des des feuerfesten Materials im Bereich der Herdsohle (241) unter 10% liegt.

5. Gleichstrom-Lichtbogenofen nach einem der Ansprüche 1 bis 4, dadurch gekennzeichnet, daß zwischen Boden (22) und der feuerfesten Auskleidung (42, 43, 44) eine Graphitschicht (47) eingefügt ist.

6. Gleichstrom-Lichtbogenofen nach einem der Ansprüche 1 bis 5, gekennzeichnet durch eine im wesentlichen graphitfreie feuerfeste Auskleidung 43′, 44′) im zentrischen Bereich der Herdsohle (241).

7. Gleichstrom-Lichtbogenofen nach einem der Ansprüche 1 bis 6, gekennzeichnet durch einen Kupferbelag (222) des Stahlblechbodens (221) einer Dicke von max. 10 mm.

## Claims

1. Direct-current arc furnace, having a cathodically connected graphite electrode (71), which is adjustable through the cover (23) of the receptacle (21) relative to the hearth (24), the receptacle base of said furnace forming the anode and comprising a supporting sheet steel base (22) and a lining (42, 43, 44), which lies on said sheet steel base and is formed from a fireproof, at least partially electrically conductive material, a copper insert being introduced between the sheet steel base (22) and the fireproof lining (42, 43, 44), characterised by a copper-plated sheet steel base (221, 222) having connections (226, 226′) for the anode current, which connections extend through the sheet steel base (221) and lie on the copper plating (222).

2. Direct-current arc furnace according to claim 1, characterised in that the fireproof lining (42, 43, 44), which lies on the base (22), is formed from graphite-containing material.

3. Direct-current arc furnace according to claim 1 or claim 2, characterised in that the graphite content in the fireproof lining, which lies on the receptacle base, reduces in the direction from the base (22) to the hearth bed (241).

4. Direct-current arc furnace according to claim 3, characterised in that the graphite content in the region of the base is approx. 20%, and the graphite content in the fireproof material in the region of the hearth bed (241) is less than 10%.

5. Direct-current arc furnace according to one of claims 1 to 4, characterised in that a graphite layer (47) is introduced between the base (22) and the fireproof lining (42, 43, 44).

6. Direct-current arc furnace according to one of claims 1 to 5, characterised by a substantially graphite-free, fireproof lining (43′, 44′) in the central region of the hearth bed (241).

7. Direct-current arc furnace according to one of claims 1 to 6, characterised by a copper plating (222) of the sheet steel base (221) having a max. thickness of 10 mm.

## Revendications

1. Four à arc à courant continu comprenant une électrode en graphite (71) branchée de manière cathodique et déplaçable à travers le couvercle (23) de l'enceinte (21) par rapport au creuset (24), dont le fond de l'enceinte qui forme l'anode est constitué par un fond en tôle d'acier de support (22) et une maçonnerie (42, 43, 44) montée par dessus en un matériau ignifuge et au moins en partie électriquement conducteur, une couche de cuivre étant interposée entre le fond en tôle d'acier (22) et la maçonnerie ignifuge (42, 43, 44), qui est branchée de manière anodique, caractérisé par des raccords (226, 226′) destinés au courant anodique, qui traversent le fond en tôle d'acier plaquée de cuivre (221, 222) comprenant le fond en tôle d'acier (221) et sont reliés au placage de cuivre (222).

2. Four à arc à courant continu selon la revendication 1, caractérisé en ce que le revêtement ignifuge (42, 43, 44) disposé sur le fond (22) est constitué en un matériau contenant du graphite.

3. Four à arc à courant continu selon la revendication 1 ou 2, caractérisé en ce que la teneur en graphite du revêtement ignifuge disposé sur le fond de l'enceinte va en diminuant en partant du fond (22) et en direction de la sole (241) du creuset.

4. Four à arc à courant continu selon la revendication 3, caractérisé en ce que la teneur en graphite dans la zone de fond est d'environ 20% et la teneur en graphite du matériau ignifuge dans la région de la sole (241) du creuset est inférieure à 10%.

5. Four à arc à courant continu selon l'une quelconque des revendications 1 à 4, caractérisé en ce qu'une couche de graphite (47) est interposée entre le fond (22) et le revêtement ignifuge (42, 43, 44).

6. Four à arc à courant continu selon l'une quelconque des revendications 1 à 5, caractérisé par un revêtement (43′, 44′) ignifuge et sensiblement exempt de graphite dans la région centrale de la sole (241) du creuset.

7. Four à arc à courant continu selon l'une quelconque des revendications 1 à 6, caractérisé par une couche de cuivre (222) du fond en tôle d'acier (221) d'une épaisseur de 10 mm au maximum.
